(19) Europäisches Patentamt
European Patent Office
Office européen des brevets

(11) **EP 3 596 488 B1**

(12) **EUROPÄISCHE PATENTSCHRIFT**

(45) Veröffentlichungstag und Bekanntmachung des Hinweises auf die Patenterteilung:
**09.03.2022 Patentblatt 2022/10**

(21) Anmeldenummer: **18701475.8**

(22) Anmeldetag: **25.01.2018**

(51) Internationale Patentklassifikation (IPC):
**G01S 7/35** *(2006.01)*   **G01S 13/58** *(2006.01)*

(52) Gemeinsame Patentklassifikation (CPC):
**G01S 13/589; G01S 7/354;** G01S 7/356

(86) Internationale Anmeldenummer:
**PCT/EP2018/051796**

(87) Internationale Veröffentlichungsnummer:
**WO 2018/166683 (20.09.2018 Gazette 2018/38)**

(54) **VERFAHREN, VORRICHTUNG UND COMPUTERPROGRAMMPRODUKT ZUM ERMITTELN VON TRANSVERSALEN RELATIVGESCHWINDIGKEITSKOMPONENTEN VON RADARZIELEN**

METHOD, DEVICE AND COMPUTER PROGRAM PRODUCT FOR ASCERTAINING TRANSVERSAL RELATIVE SPEED COMPONENTS OF RADAR TARGETS

PROCÉDÉ, DISPOSITIF ET PRODUIT-PROGRAMME INFORMATIQUE POUR LA DÉTERMINATION DE COMPOSANTES DE VITESSE RELATIVES TRANSVERSALES DE CIBLES RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2017 DE 102017204495**

(43) Veröffentlichungstag der Anmeldung:
**22.01.2020 Patentblatt 2020/04**

(73) Patentinhaber: **Robert Bosch GmbH**
**70442 Stuttgart (DE)**

(72) Erfinder: **BROSCHE, Thomas**
**70839 Gerlingen (DE)**

(56) Entgegenhaltungen:
**US-A1- 2016 245 911**

• **ANDREAS HADERER ET AL: "Lateral velocity estimation using an FMCW radar", RADAR CONFERENCE, 2009. EURAD 2009. EUROPEAN, IEEE, PISCATAWAY, NJ, USA, 30. September 2009 (2009-09-30), Seiten 129-132, XP031558390, ISBN: 978-1-4244-4747-3**

• **YECHAO BAI ET AL: "Performance Analysis of Lateral Velocity Estimation Based on Fractional Fourier Transform", IEICE TRANSACTIONS ON COMMUNICATIONS, COMMUNICATIONS SOCIETY, TOKYO, JP, Bd. E95B, Nr. 6, 1. Juni 2012 (2012-06-01) , Seiten 2174-2178, XP001576150, ISSN: 0916-8516, DOI: 10.1587/TRANSCOM.E95.B.2174 [gefunden am 2012-06-01]**

• **FLORIAN FOLSTER ET AL: "Lateral velocity estimation based on automotive radar sensors", RADAR 2006 : PROCEEDINGS OF 2006 CIE INTERNATIONAL CONFERENCE ON RADAR ; OCT. 16 - 19, 2006, SHANGHAI, CHINA, IEEE OPERATIONS CENTER, PISCATAWAY, NJ, 1. Oktober 2006 (2006-10-01), Seiten 1-4, XP031073571, ISBN: 978-0-7803-9582-4**

• **KELLNER DOMINIK ET AL: "Instantaneous lateral velocity estimation of a vehicle using Doppler radar", PROCEEDINGS OF THE 16TH INTERNATIONAL CONFERENCE ON INFORMATION FUSION, ISIF ( INTL SOCIETY OF INFORMATION FUSI, 9. Juli 2013 (2013-07-09), Seiten 877-884, XP032512378, ISBN: 978-605-86311-1-3 [gefunden am 2013-10-18] in der Anmeldung erwähnt**

**Beschreibung**

Die Erfindung betrifft ein Verfahren zum Ermitteln von transversalen Relativgeschwindigkeitskomponenten von Radarzielen. Die Erfindung betrifft ferner eine Vorrichtung zum Ermitteln von transversalen Relativgeschwindigkeitskomponenten von Radarzielen.

Stand der Technik

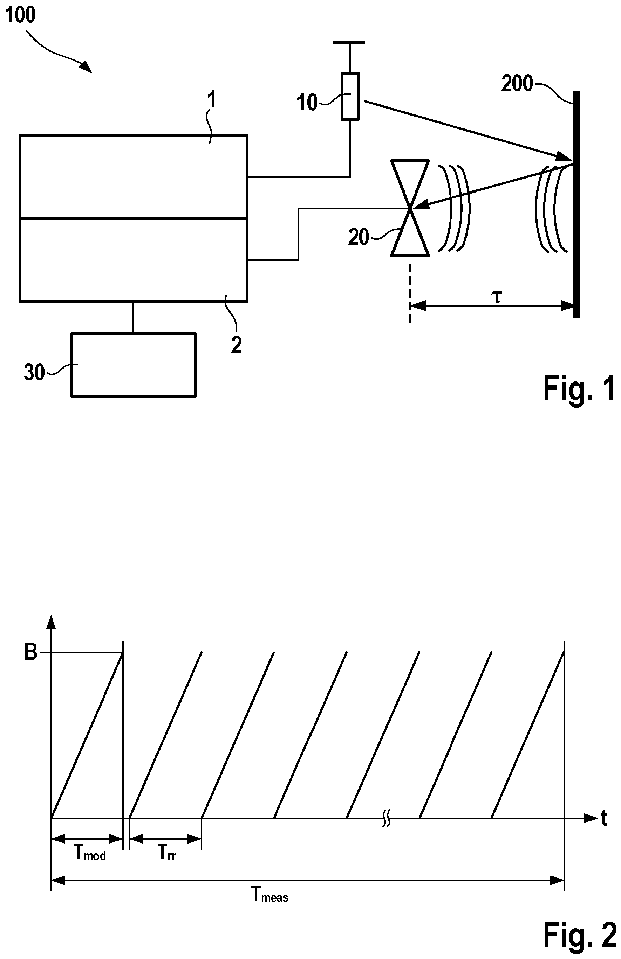

Im Stand der Technik sind Radarsysteme z.B. aus M. Skolnik, "Radar Handbook", 3rd edition, 2008 bekannt. Fig. 1 zeigt eine prinzipielle Darstellung einer bekannten Radarvorrichtung 100. Ein in einem Sender 1 erzeugtes moduliertes Radarsignal wird über eine Sendeantenne 10 abgestrahlt. Das abgestrahlte elektromagnetische Signal wird dann an gegebenenfalls in einem Detektionsfeld vorhandenen Radarzielen 200 (z.B. Kraftfahrzeuge, Personen, Pfosten, Leitplanken, Übergänge zwischen unterschiedlichen Materialen, usw.) reflektiert und nach einer Verzögerungszeit $\tau$ über eine Empfangsantenne 20 wieder empfangen und im Empfänger 2 mittels einer Auswerteeinrichtung 30 weiterverarbeitet.

Neuartige Radarsysteme verwenden als Sendesignale eine so genannte Fast-Chirp- bzw. Rapid-Chirp-Modulation, wie es z.B. aus Steffen Lutz, Daniel Ellenrieder, Thomas Walter, Robert Weigel: "On fast chirp Modulations and Compressed Sensing for Automotive Radar Applications", International Radar Symposium, 2014 bekannt ist. Hierbei werden während eines z.B. 20ms langen Messintervalls $T_{meas}$ = MxTrr insgesamt M kurze FMCW-Rampen (engl. frequency modulated continuous wave) mit einer Dauer $T_{mod}$ von z.B. $10\mu s$ bis $100\mu s$ gesendet, wie in Fig. 2 dargestellt. Der zeitliche Abstand der einzelnen Rampen $T_{rr}$ liegt dabei in der gleichen Größenordnung, wobei dieser auch etwas größer oder geringer als die Rampendauer sein kann. Die Rampen können auch zeitlich nicht äquidistant angeordnet sein nicht (nicht dargestellt).

Bekannt sind Radarsysteme mit ineinander verschachtelten Rampen z.B. aus DE 10 2012 220 879 A1, WO 2015 197 229 A1 oder WO 2015 197 222 A1, die zum Beispiel zum Auflösen von Mehrdeutigkeiten in der Geschwindigkeit oder Entfernung verwendet werden.

Als Ergebnis erhält man zunächst das Empfangssignal über der (Modulations-) Frequenz für jede einzelne Rampe. Dass der jeweiligen Rampe zugehörige, gemessene und in der Regel digitalisierte Empfangssignal kann nun über eine inverse Fourier-Transformation in den Zeitbereich transformiert werden. Meist wird hierzu jedoch eine digitale Fourier-Transformation (DFT) bzw. Fast-Fourier-Transformation (FFT) mit geeigneter Fensterung eingesetzt und der so transformierte Bereich als "Beatfrequenzbereich" bezeichnet. Ein weiterer vorgesehener Schritt ist die Fourier-Transformation in den Doppler-Frequenzbereich von Rampe-zu-Rampe. Hierzu wird die Fourier-Transformation entlang korrespondierender Werte der Einzelrampen (in Doppler- bzw. Geschwindigkeitsrichtung) durchgeführt. Beide Transformationen können in ihrer Reihenfolge auch vertauscht oder als zweidimensionale Fourier-Transformation betrachtet werden.

Es folgen typischerweise weitere Schritte, wie die Detektion, die Schätzung des Abstands und der Radialkomponente der Relativgeschwindigkeit anhand der Positionen der Peaks im zweidimensionalen Spektrum und verschiedene Fehlerkompensationen. Ein Peak entspricht dabei einem Zielreflex, wobei ein physikalisches Ziel (z.B. Kfz, Person, Pfosten, usw.) mehrere Zielreflexe aufweisen kann.

Besitzt das Radarsystem eine Antenne mit mehreren Sende- und/oder Empfangskanälen (z.B. realisiert durch einzelne Patches einer Patch-Antenne) d.h. ein Antennenarray, dann kann zusätzlich eine Winkelschätzung der Zielreflexe und damit eine Bestimmung der 3D-Zielpositionen im Raum durchgeführt werden. Dazu werden die ersten Signalverarbeitungsschritte vor der Detektion für jede Kombination aus Sende- und Empfangskanal separat ausgeführt. Anhand der zusammengefassten Spektren der einzelnen Kanäle wird dann die Winkelschätzung durchgeführt. Die geschätzten Ziel(reflex)parameter können zum Beispiel für ein nachfolgendes Tracking, Clustern, Zielklassifikation bzw. Datenfusion für verschiedenste Anwendungen, wie z.B. Adaptive Cruise Control (ACC), Blind Spot Detection, automatische Notbremsfunktion usw., verwendet werden.

Aus D. Kellner et al. "Instantaneous Lateral Velocity Estimation of a Vehicle using Doppler Radar", 16th International Conference on Information Fusion, Istanbul, Turkey, 2013 ist ein Verfahren zur Schätzung von Quergeschwindigkeiten von Radarzielen bekannt. Dabei werden die Quergeschwindigkeiten bestimmt, indem mehrere Zielreflexe zusammengefasst werden, die einem einzelnen starren Körper zugeordnet werden. Dies ist möglich, da die Verteilung der gemessenen Radialkomponenten der Relativgeschwindigkeiten von den Einzelpositionen der Reflexe im Raum abhängt. Voraussetzung dafür ist, dass für das entsprechende physikalische Ziel auch mehrere räumlich verteilte Reflexpositionen gemessen und als zusammengehörig geclustert werden können. Beim Clustern können allerdings auch fehlerhafte Zuordnungen entstehen.

Bekannte Ansätze in der Radarsignalverarbeitung bestimmen nur die Radial- bzw. Longitudinalkomponente der Relativgeschwindigkeit zwischen Radarsensor und Einzelreflexpositionen von Zielen.

Offenbarung der Erfindung

Es ist eine Aufgabe der vorliegenden Erfindung, ein verbessertes Verfahren zum Ermitteln einer Quergeschwindigkeit eines Radarziels bereitzustellen.

Die Aufgabe wird gemäß einem ersten Aspekt gelöst mit einem Verfahren nach Anspruch 1.

Vorteilhaft ist es auf diese Weise möglich, mit einer einzigen Messung eine transversale Geschwindigkeitskomponente eines Radarziels zu messen. Vorteilhaft sind dadurch keine aufwendigen Trackingverfahren erforderlich, wodurch ein vollständiger Geschwindigkeitsvektor mit einer einzigen Messung erfasst wird.

Gemäß einem zweiten Aspekt wird die Aufgabe gelöst mit einer Vorrichtung nach Anspruch 9.

Vorteilhafte Weiterbildungen des Verfahrens sind Gegenstand von abhängigen Ansprüchen.

Vorteilhafte Weiterbildungen des Verfahrens sehen vor, dass die identisch modulierten Sendesignale rampenförmig frequenzmodulierte Radarsignale oder nichtlineare Rampensignale oder periodische Pulssignale oder OFDM-Signale sind. Auf diese Weise können vorteilhaft unterschiedliche Radarsignale für die Durchführung des Verfahrens verwendet werden.

Eine weitere vorteilhafte Weiterbildung des Verfahrens sieht vor, dass die transversale Geschwindigkeitskomponente des wenigstens eines Radarziels in Azimut- und/oder in Elevationsrichtung ermittelt wird. Dadurch ist vorteilhaft eine umfassende Detektionscharakteristik der Radarvorrichtung unterstützt.

Eine vorteilhafte Weiterbildung des Verfahrens sieht vor, dass eine Selektion und Rekonstruktion eines Zielreflexsignals über ein Winkelspektrum durchgeführt wird, wobei Zielreflex-Positionen über den Azimut- und/oder Elevationswinkel voneinander getrennt werden. Auf diese Weise kann im Falle, dass mehrere Zielreflexe im Entfernungs-Geschwindigkeits-Raum an derselben Entfernungs/Geschwindigkeitsposition angeordnet sind, eine Unterscheidung von Radarzielen durchgeführt werden.

Eine weitere vorteilhafte Weiterbildung des Verfahrens sieht vor, dass für die Ermittlung der Radarziele der Erfassungsbereich mit den transversalen Geschwindigkeiten so gewählt wird, dass die Gütefunktion im Erfassungsbereich konvex ist und zudem der Erfassungsbereich nicht vollständig abgerastert wird. Auf diese Weise muss nicht der komplette Erfassungsbereich berechnet werden, sodass man nicht in einem lokalen Maximum "hängen" bleibt. Eine effiziente Durchführung des Verfahrens ist auf diese Weise unterstützt, z.B. kann dies mittels bekannter Gradientenverfahren, wie zum Beispiel Newton-Iteration durchgeführt werden.

Eine weitere vorteilhafte Weiterbildung des Verfahrens sieht vor, dass das Verfahren anwendungsspezifisch für ausgewählte Radarziele durchgeführt wird. Dadurch kann das Verfahren vorteilhaft für vielfältige Anwendungen eines Radarsystems in einem Kraftfahrzeug, z.B. für ein ACC-System, automatische Notbremsfunktion, Totwinkel-Erkennung, usw. verwendet werden.

Eine weitere vorteilhafte Weiterbildung des Verfahrens sieht vor, dass das Verfahren für ein tracking-basiertes Verfahren verwendet wird. Auf diese Weise können die bekannten trackingbasierten Verfahren noch genauer durchgeführt werden, wodurch eine Prädiktion von Radarzielen verbessert ist.

Die Erfindung wird nachfolgend mit weiteren Merkmalen und Vorteilen anhand von mehreren Figuren im Detail beschrieben. Dabei bilden alle in der Beschreibung und in den Figuren offenbarten Merkmale den Gegenstand der Erfindung, unabhängig von ihrer Rückbeziehung in den Patentansprüchen. Die Figuren dienen vor allem einer Erläuterung der erfindungswesentlichen Prinzipien.

Offenbarte Verfahrensmerkmale ergeben sich analog aus entsprechenden offenbarten Vorrichtungsmerkmalen und umgekehrt. Dies bedeutet insbesondere, dass sich Merkmale, technische Vorteile und Ausführungen betreffend das Verfahren in analoger Weise aus entsprechenden Merkmalen, technischen Vorteilen und Ausführungen betreffend die Vorrichtung ergeben und umgekehrt.

In den Figuren zeigt:

Fig. 1    ein prinzipielles Blockschaltbild eines Radarsystems;

Fig. 2    zeitliche Verläufe der Modulationsfrequenz von für das Verfahren verwendeten beispielhaften Rampensignalen;

Fig. 3    einen prinzipiellen Ablauf einer Signalverarbeitung zum Ermitteln einer transversalen Geschwindigkeitskomponente eines Radarziels;

Fig. 4    mehrere Radarziele eines Betragsspektrums in einem Entfernungs-Geschwindigkeits-Raum;

Fig. 5    eine Darstellung eines physikalischen Zusammenhangs der Quergeschwindigkeit eines Radarziels;

Fig. 6    eine Darstellung von sich ändernden Vektoren zu Radarzielen;

Fig. 7    mehrere zeitliche Verläufe von sich ändernden Parametern von Radarzielen;

Fig. 8    einen prinzipiellen Ablauf einer weiteren Signalverarbeitung zum Ermitteln einer transversalen Geschwindigkeitskomponente eines Radarziels; und

Fig. 9    eine Darstellung einer Fensterung bzw. Selektion von Radarzielen.

Beschreibung von Ausführungsformen

Eine Aufgabe der Erfindung ist es insbesondere, transversale Komponenten einer Geschwindigkeit von Radarzielen bzw. deren vollständige Geschwindigkeitsvektoren anhand einer Einzelmessung ohne vorheriges Clustering bzw. Tracking zu ermitteln.

Dazu wird die an sich bekannte Radarvorrichtung 100 von Fig. 1 verwendet, wobei von einer Sendeeinrichtung 1, 10 in einem Messintervall bzw. Messdauer $T_{meas}$ identisch modulierte Sendesignale in einen Detektionsbereich ausgesendet werden. Dabei können die identisch modulierten Sendesignale rampenförmig frequenzmodulierte Radarsignale oder nichtlineare Rampensignale oder periodische Pulssignale oder OFDM-Signale sein.

Die transversalen Geschwindigkeitskomponenten werden anhand der Messwerte innerhalb der Messdauer $T_{meas}$ bestimmt und stehen zum Beispiel einem nachfolgenden Tracking, Clustering, Zielklassifikation, usw. als zusätzliche Informationen zur Verfügung. Die gegebenenfalls fehlerhafte Zuordnung der Reflexpositionen von Messung zu Messung im Tracking und zeitliche Ableitungen der Reflexpositionen werden auf diese Weise vorteilhaft vermieden.

Erfindungsgemäß kann die zusätzlich gewonnene Information der transversalen Geschwindigkeitskomponente für eine verbesserte Funktionalität eines Fahrerassistenzsystems eines Kraftfahrzeugs, z.B. einer automatischen Notbremsfunktion verwendet werden. Dabei kann vorteilhaft erkannt werden, ob sich das Ziel zum Beispiel aus bzw. in die eigene Fahrspur bewegt. Auch für Tote-Winkel-Detektion und/oder ACC kann die ermittelte transversale Geschwindigkeitskomponente für das zu verfolgende Ziel verwendet werden.

Optional ist es mit dem vorgeschlagenen Verfahren auch möglich, eine Warn- bzw. eine Kollisionsvermeidungsfunktion für herabfallende Gegenstände (z.B. Steinschlag im Gebirge, Steinfall von Brücken, usw.) zu realisieren. Die geschätzte transversale Geschwindigkeit kann hier zusätzlich zum Tracking verwendet werden, wobei ein geeignetes Antennendesign mit ausreichend großem Detektionsfeld, insbesondere in Elevationsrichtung, erforderlich ist.

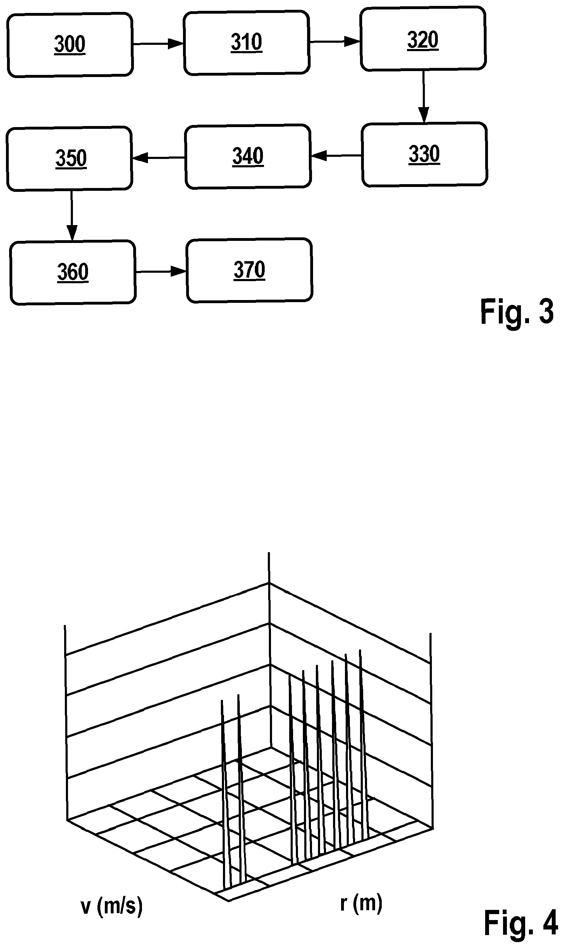

Ein grundsätzlicher Ablauf einer für das vorgeschlagene Verfahren erforderlichen Signalverarbeitung ist in Fig. 3 dargestellt. Anhand der in Schritt 300 analog-zu-digital gewandelten Messwerte, erhält man nach einer in Schritt 310 durchgeführten zweidimensionalen Fourier-Transformation (2D-DFT) für jeden Kanal, d.h. für jede Kombination aus Sende- und Empfangselementen der Antenne (z.B. Patch-Array) 10, 20 ein zweidimensionales Spektrum im Beatfrequenz-Doppler bzw. nach einer Kompensation des Doppler-Anteils in der Beatfrequenz (nicht dargestellt) im Entfernungs-Geschwindigkeits-Raum, wie es prinzipiell als Betragsspektrum in Fig. 4 dargestellt ist. Fig. 4 zeigt lediglich beispielhaft insgesamt acht Zielreflexe, die im Entfernungs-Geschwindigkeits-Raum alle bei der gleichen Radialgeschwindigkeit in unterschiedlichen Entfernungen angeordnet sind.

Für die Zielreflexe erhält man in Schritt 320 detektierte Spitzenwerte (Peaks) in einem aus den Einzelspektren der Kanäle berechneten Betragsspektrum, deren Positionen im Schritt 330 geschätzt werden. Anhand der zu den jeweiligen detektierten Reflexpositionen gehörigen Messwerte mehrerer Kanäle (zum Beispiel eines MIMO-Antennensystems), wird nachfolgend in Schritt 340 eine Winkelschätzung in Azimut- und/oder Elevationsrichtung für die betreffenden Zielreflexe durchgeführt.

Die Schritte 300 bis 340 umfassen somit Standardschritte einer an sich bekannten Signalverarbeitung.

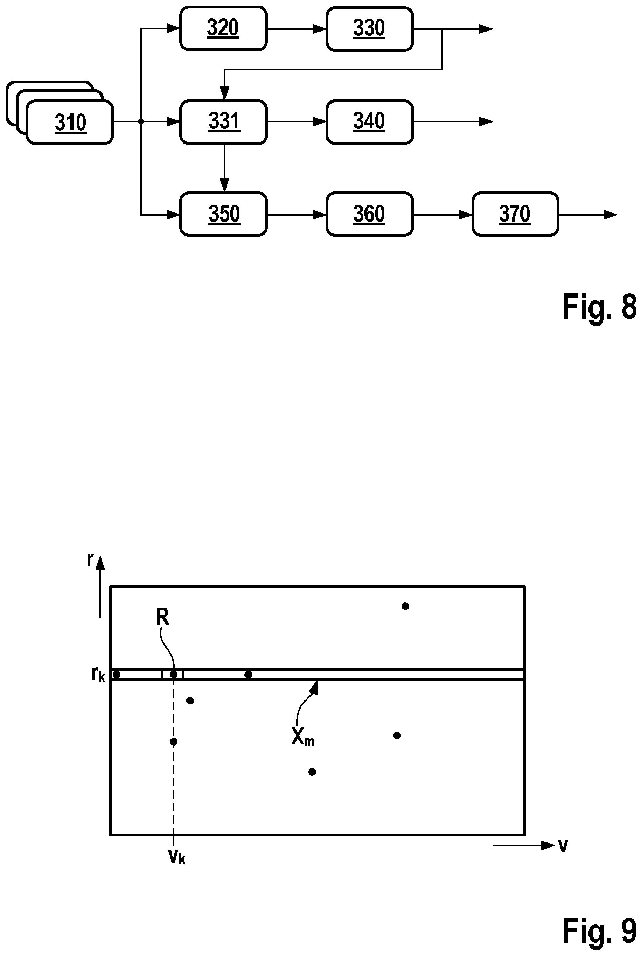

Erfindungsgemäß wird nun für einen oder mehrere gewählte detektierte Zielreflexe zusätzlich noch die transversale Geschwindigkeitskomponente geschätzt bzw. näherungsweise berechnet. Zu diesem Zweck werden in Schritt 350 in den Einzelspektren die zum jeweiligen Zielreflex bzw. Peak nicht zugehörigen Werte auf Null gesetzt ("Fensterung", wie in Fig. 9 näher erläutert), wodurch im Ergebnis eine Auswahl der die Zielreflexe repräsentierenden Messwerte durchgeführt wird. Alternativ kann zu diesem Zweck auch eine genaue Schätzung der komplexwertigen Peak-Amplitude und Position durchgeführt werden. Diese Rekonstruktion wird dann in Schritt 360 in Doppler-Richtung invers Fouriertransformiert, sodass man eine Folge von vorverarbeiteten komplexen Signalwerten $x_m$ erhält, die mit den jeweiligen zeitlich aufeinander folgenden Rampen korrespondiert.

Anhand der derart erhaltenen und vorverarbeiteten Messwerte $x_m$ werden in Schritt 370 die transversalen Geschwindigkeitskomponenten in Azimut- und/oder Elevationsrichtung geschätzt. Dazu wird die über die Messdauer $T_{meas} = M \times T_{rr}$ (d.h. von Rampe m zu Rampe m+1) variierende Entfernung durch folgendes einfaches mathematisches Modell abgebildet:

$$r(t) = \sqrt{r_0^2 + (v_q \cdot t)^2}; \quad \Delta r(t) = r(t) - r_0; \quad t = -\frac{T_{meas}}{2} \ldots \frac{T_{meas}}{2}$$

$$v_e = -\frac{v_q^2 \cdot t}{r(t)}; \quad a_e = -\frac{(r_0 \cdot v_q)^2}{r(t)^3}; \quad \Delta\varphi(t) = 2 \operatorname{atan}\left(\frac{v_q t}{2r_0}\right)$$

Die mittlere Entfernungsänderung, radiale Geschwindigkeit und Beschleunigung sind dabei wie folgt definiert:

$$\Delta\bar{r} = \begin{cases} r_0 \cdot \left( \dfrac{\sqrt{1+b^2}}{2} + \dfrac{1}{2b} \cdot \ln\left(b + \sqrt{1+b^2}\right) - 1 \right); & v_q \neq 0 \, m/s \\ \\ 0 & v_q = 0 \, m/s \end{cases}$$

$$\bar{v}_e = 0 \, m/s; \quad \bar{a}_e = \frac{-2v_q^2}{\sqrt{(2r_0)^2 + (v_q T_{meas})^2}}; \quad b = \frac{v_q T_{meas}}{2r_0}$$

mit den Parametern:

b      Hilfsparameter, für Verbesserung der Übersichtlichkeit
$r_0$      minimale Entfernung des Radarziels in der Mitte des Messintervalls (zum Zeitpunkt t = 0)
$\Delta r(t)$      zeitliche Entfernungsänderung des Radarziels
$v_q$      transversale Geschwindigkeit entweder in Azimut- oder Elevationsrichtung
$v_e$      aus der Quergeschwindigkeit resultierende winkelabhängige Radialkomponente der relativen Geschwindigkeit
$a_e$      aus der Quergeschwindigkeit resultierende winkelabhängige radiale Beschleunigungskomponente
$\Delta\varphi$      Winkeländerung entweder in Azimut- oder Elevationsrichtung oder einer Linearkombination aus beiden

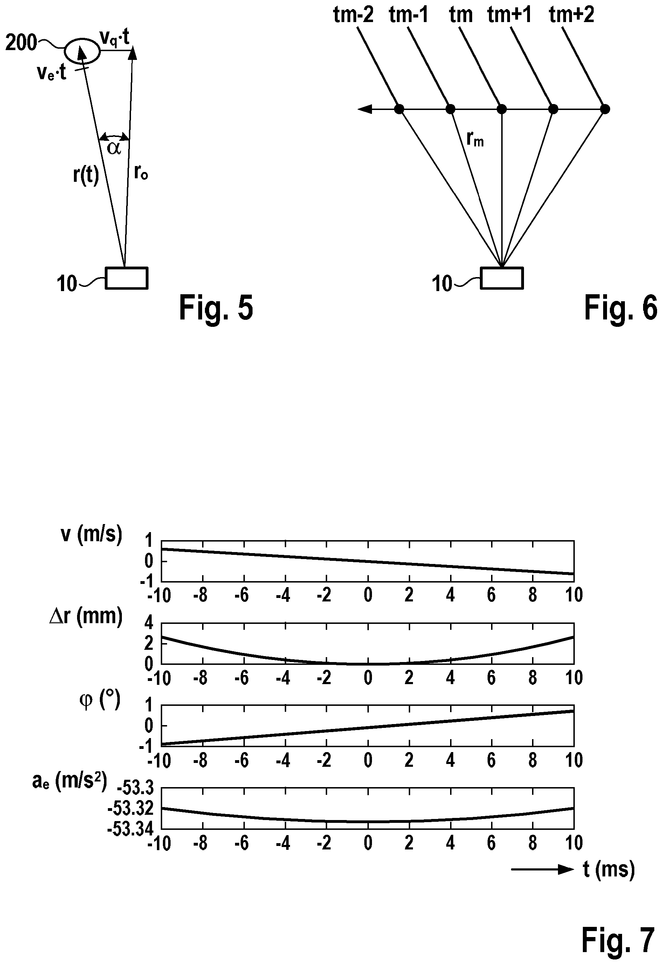

Die transversale Geschwindigkeit wirkt sich also sowohl über eine zeitliche Entfernungsänderung als auch über eine Winkeländerung auf das Messsignal aus, wie es nachfolgend in den Figuren 5, 6 und 7 dargestellt ist.
Fig. 5 zeigt eine Antenne 10, 20 und den Abstand ro des Radarziels 200 zum Zeitpunkt t = 0 und eine nach der Zeit t aufgrund der transversalen Geschwindigkeitskomponente $v_q$ zurückgelegte Wegstrecke $v_q \times t$ und eine daraus resultierende Wegstrecke $v_e \times t$ aufgrund der radialen Geschwindigkeitskomponente $v_e$.
Fig. 6 zeigt die Antenne 10,20 und Mittenzeitpunkte $t_m$ der Rampensignale mit daraus resultierenden Abständen $r_m$ des Radarziels 200 zur Antenne 10, 20.
Fig. 7 zeigt lediglich beispielhaft in vier Diagrammen von oben nach unten einen zeitlichen Verlauf der radialen Geschwindigkeitskomponente $v_e$ aufgrund der transversalen Geschwindigkeitskomponente $v_q$, eine daraus resultierende Abstandsänderung $\Delta r$, eine daraus resultierende Winkeländerung $\Delta\varphi$ und eine daraus resultierende Änderung der Beschleunigung $a_e$ des Radarziels 200.
Für die Schätzung der transversalen Geschwindigkeitskomponente $v_q$ werden nun die Zielpositionen zu den Zeitpunkten der jeweiligen Rampe m in Abhängigkeit von $v_q$ berechnet und die daraus resultierenden Phasenänderungen $\Delta\beta_m$ in den einzelnen Empfangskanälen ermittelt, wobei bei MIMO-Systemen hier die sich aus der Kombination von tatsächlichen Sende- und Empfangskanälen ergebenden virtuellen Empfangskanäle gemeint sind.
Man erhält für jeden Zeitschritt m einen Vektor $\mathbf{a}_m(v_{q,a}; v_{q,e})$, dessen Elemente die Empfangskanäle repräsentieren. Die Gesamtheit aller M Vektoren ergibt eine Matrix deren Spalten die Empfangskanäle und deren Zeilen die Rampenzeitpunkte repräsentiert. Diese wird jeweils für die zu untersuchende Kombination der transversalen Geschwindigkeiten in Azimutrichtung $v_{q,a}$ und Elevationsrichtung $v_{q,e}$ berechnet und mit dem vorverarbeiteten Messwertevektor $\mathbf{x}_m$ multipliziert. Die Schätzung der transversalen Geschwindigkeiten erfolgt dann durch eine Maximierung der Gütefunktion $Q(v_{q,a}; v_{q,e})$ über $v_{q,a}$ und/oder $v_{q,e}$ nach folgendem, mathematischem Modell:

$$\left\{\hat{v}_{q,a}, \hat{v}_{q,e}\right\} = \arg\max_{v_{q,a}, v_{q,e}}\left[Q\left(v_{q,a}, v_{q,e}\right)\right]; \quad m = 0, \ldots, M - 1; \quad T_{meas} = M \cdot T_{RR}$$

$$Q\left(v_{\mathrm{q.a}},v_{\mathrm{q.e}}\right)=\sum_{m=0}^{M-1}\left|\left(\boldsymbol{x}_{m}^{\mathrm{T}}\cdot\boldsymbol{A}_{\mathrm{c}}\right)\cdot\boldsymbol{a}_{m}\left(v_{\mathrm{q.a}},v_{\mathrm{q.e}}\right)\cdot\exp\left(-\mathrm{j}\cdot\omega_{\mathrm{d}}\cdot T_{\mathrm{RR}}\cdot m\right)\right|^{2}$$

$$\boldsymbol{a}_{m}\left(v_{\mathrm{q},a},v_{\mathrm{q},e}\right)=\exp\left[-\mathrm{j}\cdot\Delta\beta_{m}\left(v_{\mathrm{q},a},v_{\mathrm{q},e}\right)\right]\qquad\Delta\beta_{m}\left(v_{\mathrm{q},a},v_{\mathrm{q},e}\right)=2\left[\boldsymbol{r}_{m}\left(v_{\mathrm{q},a},v_{\mathrm{q},e}\right)-\bar{r}\right]\cdot k$$

mit den Parametern:

Q    Gütefunktion der transversalen Geschwindigkeitskomponenten in Azimut und Elevation

$v_{\mathrm{qa}}$    transversale Geschwindigkeitskomponente in Azimut

$v_{\mathrm{qe}}$    transversale Geschwindigkeitskomponente in Elevation

k    Wellenzahl

$\mathbf{a}_m$    Vektor mit Einträgen entsprechend einer Anzahl von virtuellen Empfangskanälen (Kombination aus Sende- und Empfangskanälen)

$\mathbf{A}_c$    Kalibriermatrix

m    Rampenindex bzw. Index der Zeit von Rampe zu Rampe

$\mathbf{r}_m$    Vektor der Zielentfernungen zu allen Empfangskanälen zum Zeitpunkt $\mathbf{t}_m$

$\omega_{\mathrm{d}}$    geschätzte Doppler-Kreisfrequenz

$r$    mittlerer Zielabstand im Messintervall

$\mathbf{T}_{\mathrm{RR}}$    Zeitdauer zwischen den Rampensignalen

$\Delta\varphi_m$    Änderung des Azimut und/oder Elevationswinkels zum Zeitpunkt $t_m$

$\mathbf{x}_{n}^{\mathrm{T}}$    transponierter Vektor mit dem vorverarbeiteten, selektierten und invers Fourier-transformierten Messsignal zum Zeitpunkt $t_m$, das möglichst nur den Signalanteil der Reflexion (Peak) eines physikalischen Zieles enthält, für das aktuell die transversale Geschwindigkeit geschätzt werden soll.

Fig. 8 zeigt einen prinzipiellen Ablauf des Verfahrens, der im Wesentlichen dem Ablauf von Fig. 3 entspricht mit dem Unterschied, dass in Fig. 8 in Schritt 310 angedeutet ist, dass die zweidimensionale Fourier-Transformation für mehrere Kanäle (bzw. virtuelle Empfangskanäle) durchgeführt wird. In einem Schritt 331 ist ferner eine Selektion der Messwerte für eine Winkelschätzung dargestellt. Dieser optionale Zusatzschritt ist insbesondere dann sinnvoll, um den Aufwand für die Winkelschätzung 340 zu reduzieren, d.h. die Winkelschätzung nur für Peak-Positionen in den Entfernungs-Geschwindigkeitsspektren durchzuführen, die zu für die nachfolgenden Anwendungen relevanten Zielen zugeordnet sind.

Wenn die Positionen der virtuellen Empfangsantennen im Wesentlichen äquidistant zueinander angeordnet sind, wodurch die Nebenkeulen zum Beispiel durch FFT-Fensterung (z.B. Kaiser-Fenster, Dolph-Chebyshev-Fenster) unterdrückt werden können und dadurch eine hohe Dynamik im Winkelspektrum unterstützt ist, dann ist eine Selektion des Radarziels für die Schätzung der transversalen Geschwindigkeit 350, zusätzlich im Winkelspektrum, einfacher möglich.

Falls dies nicht erfolgt, wird die Schätzung der transversalen Geschwindigkeitskomponente $v_q$ bei mehreren Radarzielen, die nur über die Winkel trennbar sind, beeinträchtigt, weil sie sich in derselben Entfernungs-Geschwindigkeitszelle befinden.

Die in den Figuren 3 und 8 skizzierten Signalverarbeitungsschritte können mit dem zugehörigen Ansteuerungsprogramm der Radarvorrichtung 100 sowohl in Software auf einer Rechnereinrichtung (z.B. Mikrocontroller, DSP, usw.) ablaufend als auch in Hardware (z.B. FPGA, ASIC, usw.) realisiert werden.

Fig. 9 zeigt ein Prinzip einer Selektion eines Radarziels 200 in einem Entfernungs-Geschwindigkeitsspektrum mit mehreren, als Punkte dargestellten Reflexpositionen eines k-ten Zielreflexes R, für den aktuell die transversale Geschwindigkeitskomponente $v_q$ berechnet werden soll. Es werden nur die Werte im Vektor $\mathbf{X}_m$ bei der geschätzten Entfernung $r_k$ verwendet. Werte im Vektor $\mathbf{x}_m$, die außerhalb der Peakbreite um $v_k$ liegen, werden durch Fensterung bzw. durch Nullsetzung unterdrückt. Im Ergebnis verbleibt dadurch nur der Zielreflex R, für den tatsächlich aktuell die transversale Geschwindigkeit ermittelt werden soll. Die Elemente des Vektors $\mathbf{X}_m$ sind die Werte der virtuellen Winkelspektren zum spektralen Index m in Geschwindigkeitsrichtung v, bzw. nach inverser Fourier-Transformation für $\mathbf{x}_m$ = IFFT($\mathbf{X}_m$) zum zeitlichen Rampenindex m. Die Fensterung erfolgt im eindimensionalen bzw. zweidimensionalen Winkelspektrum analog. Das vorgeschlagene Verfahren wird für jeden derart gefensterten Zielreflex R sequentiell durchgeführt. Durch inverse Fourier-Transformation in Schritt 360 in Doppler-Richtung wird der Vektor $\mathbf{x}$ = IFFT($\mathbf{X}$) gebildet, der als Eingabewert für die nachfolgende Schätzung der transversalen Geschwindigkeiten in Schritt 370 dient.

Eine vorteilhafte Anwendung des erfindungsgemäßen Verfahrens kann darin bestehen, ein System zu realisieren, das vor herabfallenden Gegenständen (z.B. herabgeworfene Gegenstände von einer Brücke oder Steinschlag im Gebirge) warnt und/oder einen Zusammenstoß mit den genannten Gegenständen verhindert und/oder zumindest die Schwere eines daraus resultierenden Unfalls minimiert.

**Patentansprüche**

1.  Verfahren zum Ermitteln einer transversalen Geschwindigkeitskomponente wenigstens eines Radarzieles (200) mittels einer Radarvorrichtung (100), aufweisend die Schritte:

     - Periodisches Senden von identisch modulierten Sendesignalen mittels einer Sendeeinrichtung (1, 10) mit wenigstens zwei Sendeelementen in einen definierten Erfassungsbereich der Radarvorrichtung (100) während einer definierten Messdauer ($T_{meas}$);
     - Empfangen wenigstens eines am Radarziel (200) reflektierten Radar-Empfangssignals mittels einer Empfangseinrichtung (2, 20) mit wenigstens zwei Empfangselementen;
     - Übertragen des empfangenen Radar-Empfangssignals an eine Auswerteeinrichtung (30) und Analog-Digital-Wandeln des empfangenen Radar-Empfangssignals;
     - Durchführen einer zweidimensionalen Fourier-Transformation zum Erzeugen jeweils eines Geschwindigkeits-Entfernungs-Spektrums der digitalen Messwerte für jede Kombination aus Sende- und Empfangselement;
     - Detektieren von mindestens einem Zielreflex des Radarzieles (200) anhand von definierten Scheitelwerten in einem Betragsspektrum des Geschwindigkeits-Entfernungs-Spektrums;
     - Ermitteln einer Entfernung des Radarzieles (200) zur Radarvorrichtung (100) und einer Radialgeschwindigkeitskomponente relativ zur Radarvorrichtung (100) aus dem Geschwindigkeits-Entfernungs-Spektrum;
     - Bestimmen von wenigstens einem Winkel des Radarzieles relativ zur Antenne;
     - Selektieren des Radarziels (200), für das die transversale Geschwindigkeitskomponente ermittelt werden soll;
     - Durchführen einer inversen Fourier-Transformation des derart selektierten Zielreflexes des Radarziels (200) in Doppler-Richtung; und
     - Ermitteln der transversalen Geschwindigkeitskomponente des Radarziels (200) aus den transformierten Messwerten,

     wobei zu einer Modellierung von physikalischen Gegebenheiten folgendes mathematisches Modell verwendet wird:

$$r(t) = \sqrt{r_0^2 + (v_q \cdot t)^2}; \quad \Delta r(t) = r(t) - r_0; \quad t = -\frac{T_{meas}}{2} \dots \frac{T_{meas}}{2}$$

$$v_e = -\frac{v_q^2 \cdot t}{r(t)}; \quad a_e = -\frac{(r_0 \cdot v_q)^2}{r(t)^3}; \quad \Delta\varphi(t) = 2\,\mathrm{atan}\left(\frac{v_q t}{2r_0}\right)$$

$$\Delta\bar{r} = \begin{cases} r_0 \cdot \left( \frac{\sqrt{1+b^2}}{2} + \frac{1}{2b} \cdot \ln\!\left(b + \sqrt{1+b^2}\right) - 1 \right); & v_q \neq 0\ m/s \\ 0 & v_q = 0\ m/s \end{cases}$$

$$\bar{v}_e = 0\ m/s; \quad \bar{a}_e = \frac{-2v_q^2}{\sqrt{(2r_0)^2 + (v_q T_{mess})^2}}; \quad b = \frac{v_q T_{mess}}{2r_0}$$

     mit den Parametern:

     r... Entfernung zwischen Sende- und Empfangsantenne und Radarziel
     $r_0$ minimale Entfernung des Radarziels in der Mitte des Messintervalls
     **t** Zeit
     $\Delta r$ Mittelwert der Entfernungsänderung über die Messzeit
     $v_q$ transversale Geschwindigkeit (Quergeschwindigkeit)

r(t) Zielentfernung über die Messzeit (von Rampe zu Rampe)
$\varphi$ Azimut- und/oder Elevationswinkel
$\Delta\varphi(t)$ Änderung des Azimut- und/oder Elevationswinkels über der Zeit
$v_e$ aus der Quergeschwindigkeit resultierende radiale Geschwindigkeitskomponente
$a_e$ aus der Quergeschwindigkeit resultierende radiale Beschleunigungskomponente
$T_{meas}$ Messzeit
b Hilfsparameter

und wobei eine Schätzung der transversalen Geschwindigkeitskomponente durch eine Maximierung einer Gütefunktion (Q) unter Verwendung folgender mathematischer Beziehungen ermittelt wird:

$$\{\hat{v}_{q.a}, \hat{v}_{q.e}\} = \arg \max_{v_{q.a}, v_{q.e}} [Q(v_{q.a}, v_{q.e})]; \quad m = 0, \ldots, M-1; \quad T_{meas} = M \cdot T_{RR}$$

$$Q(v_{q.a}, v_{q.e}) = \sum_{m=0}^{M-1} \left| (\boldsymbol{x}_m^{\mathrm{T}} \cdot \boldsymbol{A}_c) \cdot \boldsymbol{a}_m(v_{q.a}, v_{q.e}) \cdot \exp(-\mathrm{j} \cdot \omega_d \cdot T_{RR} \cdot m) \right|^2$$

$$\boldsymbol{a}_m(v_{q,a}, v_{q,e}) = \exp[-\mathrm{j} \cdot \Delta\beta_m(v_{q,a}, v_{q,e})]; \quad \Delta\beta_m(v_{q,a}, v_{q,e}) = 2[\boldsymbol{r}_m(v_{q,a}, v_{q,e}) - \bar{r}] \cdot k$$

mit den Parametern:

Q Gütefunktion der transversalen Geschwindigkeitskomponenten in Azimut und Elevation
$v_{qa}$ transversale Geschwindigkeitskomponente in Azimut
$v_{qe}$ transversale Geschwindigkeitskomponente in Elevation
k Wellenzahl
$a_m$ Vektor mit Einträgen entsprechend einer Anzahl von virtuellen Empfangskanälen (Kombination aus Sende- und Empfangskanal)
$A_c$ Kalibriermatrix
m Index der Zeit $t_m$
$r_m$ Vektor der Zielentfernungen zu allen Empfangskanälen zum Zeitpunkt $t_m$
$\omega_d$ geschätzte Doppler-Kreisfrequenz
$r$ mittlerer Zielabstand im Messintervall
$T_{RR}$ Zeitdauer zwischen den Rampensignalen
$\Delta\beta_m$ Änderung der Phasenlage des Messsignals zum Zeitpunkt $t_m$
$\boldsymbol{x}_m^{\mathrm{T}}$ transponierter Vektor mit dem vorverarbeiteten, selektierten und

invers Fourier-transformierten Messsignal zum Zeitpunkt $t_m$, das möglichst nur den Signalanteil der Reflexion (Peak) eines physikalischen Zieles enthält, für das aktuell die transversale Geschwindigkeit geschätzt werden soll.

2. Verfahren nach Anspruch 1, wobei die identisch modulierten Sendesignale rampenförmig frequenzmodulierte Radarsigriale oder nichtlineare Rampensignale oder periodische Pulssignale oder OFDM-Signale sind.

3. Verfahren nach Anspruch 1 oder 2, wobei die transversale Geschwindigkeitskomponente des wenigstens eines Radarziels (200) in Azimut- und/oder in Elevationsrichtung ermittelt wird.

4. Verfahren nach einem der vorhergehenden Ansprüche, wobei eine Selektion und Rekonstruktion eines Zielreflex-Signals über ein Winkelspektrum durchgeführt wird, wobei die Zielreflex-Positionen über den Azimut- und/oder Elevationswinkel voneinander getrennt werden.

5. Verfahren nach einem der vorhergehenden Ansprüche, wobei für die Ermittlung der Radarziele (200) der Erfassungsbereich mit den transversalen Geschwindigkeiten so gewählt wird, dass die Gütefunktion im Erfassungsbereich konvex ist und zudem der Erfassungsbereich nicht vollständig abgerastert wird.

6. Verfahren nach einem der vorhergehenden Ansprüche, wobei das Verfahren anwendungsspezifisch für ausgewählte Radarziele (200) durchgeführt wird.

7. Verfahren nach einem der vorhergehenden Ansprüche, wobei das Verfahren für ein tracking-basiertes Verfahren verwendet wird.

8. Verwendung des Verfahrens nach einem der vorhergehenden Ansprüche für ein System das vor herabfallenden Gegenständen warnt und/oder einen Zusammenstoß damit verhindert und/oder zumindest die Schwere eines daraus resultierenden Unfalls minimiert.

9. Vorrichtung zum Ermitteln einer transversalen Geschwindigkeitskomponente wenigstens eines Radarzieles (200) mittels einer Radarvorrichtung (100), aufweisend:

   - eine Sendeeinrichtung (1, 10) mit einer definierten Anzahl von Sendeelementen, die ausgebildet ist, ein periodisches Senden von identisch modulierten Radar-Sendesignalen in einen definierten Erfassungsbereich der Radarvorrichtung (100) während einer definierten Messdauer ($T_{meas}$) durchzuführen;
   - eine Empfangseinrichtung (2, 20) mit einer definierten Anzahl von Empfangselementen, die ausgebildet ist, ein Empfangen wenigstens eines am Radarziel (200) reflektierten Radar-Empfangssignals durchzuführen; und
   - eine Auswerteeinrichtung (30), die ausgebildet ist:
   - ein Analog-zu-Digital-Wandeln der empfangenen Radar-Empfangssignale durchzuführen;
   - eine zweidimensionale Fourier-Transformation zum Erzeugen eines Geschwindigkeits-Entfernungs-Spektrums der digitalen Messwerte für jede Kombination aus Sende- und Empfangselement durchzuführen;
   - ein Detektieren von mindestens einem Zielreflex des Radarzieles (200) anhand von definierten Scheitelwerten in einem Betragsspektrum des Geschwindigkeits-Entfernungs-Spektrums durchzuführen;
   - ein Ermitteln einer Entfernung des Radarzieles (200) zur Radarvorrichtung (100) und einer Radialgeschwindigkeitskomponente relativ zur Radarvorrichtung (100) aus dem Geschwindigkeits-Entfernungs-Spektrum durchzuführen;
   - ein Bestimmen von wenigstens einem Winkel des Radarzieles (200) relativ zur Antenne (10, 20) durchzuführen;
   - Selektieren des Radarziels, für das die transversale Geschwindigkeitskomponente ermittelt werden soll; wobei
   - sämtliche Zielreflexe und Störungen mit Ausnahme des Radarziels (200), für das die transversale Geschwindigkeitskomponente geschätzt werden soll, unterdrückt werden; und wobei
   - für den derart selektierten Zielreflex des Radarziels (200) eine inverse Fourier-Transformation in Doppler-Richtung durchgeführt wird, wobei die Vorrichtung derart angepasst ist, aus den transformierten Messwerten die transversale Geschwindigkeitskomponente des Radarziels (200) gemäß dem Verfahren nach Anspruch 1 zu ermitteln.

10. Verwendung einer Vorrichtung nach Anspruch 10, **dadurch gekennzeichnet, dass** die Vorrichtung ausgebildet ist, vor herabfallenden Gegenständen zu warnen und/oder einen Zusammenstoß mit den herabfallenden Gegenständen zu verhindern und/oder zumindest die Schwere eines daraus resultierenden Unfalls zu minimieren.

11. Computerprogrammprodukt mit Programmcodemitteln zur Durchführung des Verfahrens nach einem der Ansprüche 1 bis 8, wenn es auf einer Radarvorrichtung (100) abläuft und auf einem computerlesbaren Datenträger gespeichert ist.

**Claims**

1. Method for ascertaining a transverse velocity component of at least one radar target (200) by means of a radar apparatus (100), including the steps of:

   - by means of a transmission device (1, 10) having at least two transmission elements, periodically transmitting identically modulated transmission signals into a defined detection region of the radar apparatus (100) during a defined measurement duration ($T_{meas}$);
   - by means of a receiver device (2, 20) having at least two receiver elements, receiving at least one radar reception signal that was reflected at the radar target (200);
   - transmitting the received radar reception signal to an evaluation device (30) and performing an analogue-to-digital conversion on the received radar reception signal;
   - performing a two-dimensional Fourier transform for the purposes of generating a respective velocity-displacement spectrum of the digital measurement values for each combination of transmission and receiver element;

- detecting at least one target reflection of the radar target (200) on the basis of defined peak values in a magnitude spectrum of the velocity-displacement spectrum;
- ascertaining a distance between the radar target (200) and radar apparatus (100), and a radial velocity component relative to the radar apparatus (100) from the velocity-displacement spectrum;
- determining at least one angle of the radar target relative to the antenna;
- selecting the radar target (200) for which the transverse velocity component is intended to be ascertained;
- performing an inverse Fourier transform on the target reflection of the radar target (200), selected in this way, in the Doppler direction; and
- ascertaining the transverse velocity component of the radar target (200) from the transformed measurement values,

wherein the following mathematical model is used to model physical conditions:

$$r(t) = \sqrt{r_0^2 + (v_q \cdot t)^2}; \quad \Delta r(t) = r(t) - r_0; \quad t = -\frac{T_{meas}}{2} \ldots \frac{T_{meas}}{2}$$

$$v_e = -\frac{v_q^2 \cdot t}{r(t)}; \quad a_e = -\frac{(r_0 \cdot v_q)^2}{r(t)^3}; \quad \Delta\varphi(t) = 2\,\text{atan}\left(\frac{v_q t}{2r_0}\right)$$

$$\Delta\bar{r} = \begin{cases} r_0 \cdot \left(\frac{\sqrt{1+b^2}}{2} + \frac{1}{2b} \cdot \ln\left(b + \sqrt{1+b^2}\right) - 1\right); & v_q \neq 0\ m/s \\ 0 & v_q = 0\ m/s \end{cases}$$

$$\bar{v}_e = 0\ m/s; \quad \bar{a}_e = \frac{-2v_q^2}{\sqrt{(2r_0)^2 + (v_q T_{mess})^2}}; \quad b = \frac{v_q T_{mess}}{2r_0}$$

with the following parameters:

r distance between transmission- and receiver antenna and radar target,
$r_0$ minimum distance of the radar target in the middle of the measurement interval,
t time,
Δr mean value of the change in distance over the measurement time,
$v_q$ transverse velocity,
r(t) target distance over the measurement time (from ramp to ramp),
φ azimuth and/or elevation angle,
Δφ(t) change in the azimuth and/or elevation angle over time
$v_e$ radial velocity component resulting from the transverse velocity,
$a_e$ radial acceleration component resulting from the transverse velocity,
$T_{meas}$ measurement time,
b auxiliary parameter,

and wherein an estimate of the transverse velocity component is ascertained by maximizing a quality function (Q) using the following mathematical relationships:

$$\left\{\hat{v}_{q.a}, \hat{v}_{q.e}\right\} = \arg\max_{v_{q.a}, v_{q.e}}\left\{Q\left(v_{q.a}, v_{q.e}\right)\right\}; \quad m = 0, \ldots, M-1; \quad T_{meas} = M \cdot$$

$$v_{q.a}, v_{q.e}) = \sum_{m=0}^{M-1} \left| \left( x_m^{\mathrm{T}} \cdot A_c \right) \cdot a_m \left( v_{q.a}, v_{q.e} \right) \cdot \exp\left( - j \cdot \omega_d \cdot T_{RR} \cdot m \right) \right|^2$$

$$a_m(v_{q.a}, v_{q.e}) = \exp\left[ -j \cdot \Delta\beta_m(v_{q.a}, v_{q.e}) \right], \quad \Delta\beta_m(v_{q.a}, v_{q.e}) = 2\left[ r_m(v_{q.a}, v_{q.e}) - \overline{r} \right]$$

with the following parameters:

Q quality function of the transverse velocity components in azimuth and elevation,
$v_{qa}$ transverse velocity component in azimuth,
$v_{qe}$ transverse velocity component in elevation,
k wave number,
$a_m$ vector with entries corresponding to a number of virtual receiver channels (combination of transmission and receiver channel),
$A_c$ calibration matrix,
m index of the time $t_m$,
$r_m$ vector of the target distances for all receiver channels at the time $t_m$,
$\omega_d$ estimated angular Doppler frequency,
$\overline{r}$ mean target distance during the measurement interval,
$T_{RR}$ time duration between the ramp signals,
$\Delta\beta_m$ change in the phase angle of the measurement signal at the time $t_m$,
$x_m^T$ transposed vector with the pre-processed, selected and inverse Fourier transformed measurement signal at the time $t_m$, which where possible contains only the signal component of the reflection (peak) of the physical target, for which the transverse velocity is intended to be estimated at the current time.

2. Method according to Claim 1, wherein the identically modulated transmission signals are ramp-shaped frequency modulated radar signals or non-linear ramp signals or periodic pulse signals or OFDM signals.

3. Method according to Claim 1 or 2, wherein the transverse velocity component of the at least one radar target (200) is ascertained in azimuth and/or in elevation direction.

4. Method according to any one of the preceding claims, wherein a selection and reconstruction of a target reflection signal is performed over an angle spectrum, the target reflection positions being separated from one another by way of the azimuth and/or elevation angle.

5. Method according to any one of the preceding claims, wherein the detection region with the transverse velocities is chosen for the ascertainment of the radar targets (200) such that the quality function is convex in the detection region and, moreover, the detection region is not completely scanned.

6. Method according to any one of the preceding claims, wherein the method is performed in an application-specific manner for selected radar targets (200).

7. Method according to any one of the preceding claims, wherein the method is used for a tracking-based method.

8. Use of the method according to any one of the preceding claims for a system which gives warning of falling objects and/or prevents a collision with the latter and/or at least minimizes the severity of a resultant accident.

9. Apparatus for ascertaining a transverse velocity component of at least one radar target (200) by means of a radar apparatus (100), comprising:

- a transmission device (1, 10) with a defined number of transmission elements, designed to perform a periodic transmission of identically modulated radar transmission signals into a defined detection region of the radar apparatus (100) during a defined measurement duration ($T_{meas}$) ;
- a receiver device (2, 20) with a defined number of receiver elements, designed to perform a reception of at least one radar reception signal reflected at the radar target (200); and

- an evaluation device (30) designed to:
- perform an analogue-to-digital conversion of the received radar reception signals;
- perform a two-dimensional Fourier transform to generate a velocity-displacement spectrum of the digital measurement values for each combination of transmission and receiver element;
- detect at least one target reflection of the radar target (200) on the basis of defined peak values in a magnitude spectrum of the velocity-displacement spectrum;
- ascertain a distance of the radar target (200) from the radar apparatus (100), and a radial velocity component relative to the radar apparatus (100) from the velocity-displacement spectrum;
- perform a determination of at least one angle of the radar target (200) relative to the antenna (10, 20);
- select the radar target for which the transverse velocity component is intended to be ascertained; wherein
- all target reflections and interferences with the exception of the radar target (200) for which the transverse velocity component is intended to be estimated are suppressed; and wherein
- an inverse Fourier transform is performed for the target reflection of the radar target (200), selected in this way, in the Doppler direction, wherein the apparatus is adapted to ascertain from the transformed measurement values the transverse velocity component of the radar target (200) in accordance with the method according to Claim 1.

10. Use of an apparatus according to Claim 10, **characterized in that** the apparatus is designed to give warning of falling objects and/or prevent a collision with the latter and/or at least minimize the severity of a resultant accident.

11. Computer program product having program code means for carrying out the method according to any one of Claims 1 to 8 when it runs on a radar apparatus (100) and is stored on a computer-readable data medium.

## Revendications

1. Procédé permettant d'établir une composante de vitesse transversale d'au moins une cible radar (200) au moyen d'un dispositif radar (100), présentant les étapes consistant à :

- envoyer périodiquement des signaux d'émission modulés de manière identique au moyen d'un dispositif d'émission (1, 10) doté d'au moins deux éléments d'émission dans une zone de détection définie du dispositif radar (100) pendant une durée de mesure définie ($T_{meas}$) ;
- recevoir au moins un signal de réception radar réfléchi sur la cible radar (200) au moyen d'un dispositif de réception (2, 20) doté d'au moins deux éléments de réception ;
- transmettre le signal de réception radar reçu à un dispositif d'évaluation (30), et effectuer une conversion analogique/numérique du signal de réception radar reçu ;
- effectuer une transformation de Fourier bidimensionnelle pour générer respectivement un spectre de vitesse/distance des valeurs de mesure numériques pour chaque combinaison d'élément d'émission et d'élément de réception ;
- détecter au moins un reflet cible de la cible radar (200) à l'aide de valeurs de crête définies dans un spectre d'amplitude du spectre de vitesse/distance ;
- établir une distance de la cible radar (200) au dispositif radar (100) et une composante de vitesse radiale par rapport au dispositif radar (100) à partir du spectre de vitesse/distance ;
- déterminer au moins un angle de la cible radar par rapport à l'antenne ;
- sélectionner la cible radar (200) pour laquelle la composante de vitesse transversale doit être établie ;
- effectuer une transformation de Fourier inverse du reflet cible ainsi sélectionné de la cible radar (200) dans la direction Doppler ; et
- établir la composante de vitesse transversale de la cible radar (200) à partir des valeurs de mesure transformées,

le modèle mathématique suivant étant utilisé pour une modélisation des données physiques :

$$r(t) = \sqrt{r_0^2 + (v_q \cdot t)^2} \; ; \; \Delta r(t) = r(t) - r_0 \; ; \; t = -\frac{T_{meas}}{2} \ldots \frac{T_{meas}}{2}$$

$$v_e = -\frac{v_q^2 \cdot t}{r(t)} \quad ; \quad a_e = -\frac{(r_0 \cdot v_q)^2}{r(t)^3} \quad ; \quad \Delta\varphi(t) = 2atan\left(\frac{v_q^t}{2r_0}\right)$$

$$\Delta\bar{r} = \begin{cases} r_0 \cdot \left(\frac{\sqrt{1+b^2}}{2} + \frac{1}{2b} \cdot \ln\left(b + \sqrt{1+b^2}\right) - 1\right) ; & v_q \neq 0m/s \\ 0 & v_q = 0m/s \end{cases}$$

$$\bar{v}_e = 0m/s \quad ; \quad \bar{a}_e = \frac{-2v_q^2}{\sqrt{(2r_0)^2 + (v_q T_{meas})^2}} \quad ; \quad b = \frac{v_q T_{meas}}{2r_0}$$

avec les paramètres :

r... la distance entre l'antenne d'émission et de réception et la cible radar,
$r_0$... la distance minimale de la cible radar au milieu de l'intervalle de mesure,
t... le temps,
Δr... la moyenne de la variation de distance pendant le temps de mesure,
vq... la vitesse transversale (vitesse latérale),
r(t)... la distance cible pendant le temps de mesure (de rampe à rampe),
φ... l'angle d'azimut et/ou l'angle d'élévation,
Δφ(t)... la variation de l'angle d'azimut et/ou d'élévation dans le temps,
ve... la composante de vitesse radiale résultant de la vitesse latérale,
ae... la composante d'accélération radiale résultant de la vitesse latérale,
$T_{meas}$... le temps de mesure,
b... un paramètre auxiliaire,

et dans lequel une estimation de la composante de vitesse transversale est établie par une maximisation d'une fonction de qualité (Q) en utilisant les relations mathématiques suivantes :

$$\{\hat{v}_{q.a}, \hat{v}_{q.e}\} = arg_{v_{q.a}, v_{q.e}}^{max} |Q(v_{q.a}, v_{q.e})| \quad ; \quad \text{m} = 0, \ldots, \text{M-1} \quad ;$$

$$T_{meas} = M \cdot T_{RR}$$

$$Q(v_{q.a}, v_{q.e}) = \sum_{m=0}^{M-1} \left| (x_M^T \cdot A_c) \cdot a_m(v_{q.a}, v_{q.e}) \cdot exp(-j \cdot \omega_d \cdot T_{RR} \cdot m) \right|^2$$

$$a_m(v_{q.a}, v_{q.e}) = exp\left[-j \cdot \Delta\beta_m(v_{q.a}, v_{q.e})\right] \quad ; \quad \Delta\beta_m(v_{q.a}, v_{q.e}) = 2\left[r_m(v_{q.a}, v_{q.e}) - \bar{r}\right] \cdot k$$

avec les paramètres :

Q... la fonction de qualité de la composante de vitesse transversale en azimut et en élévation,
$v_{qa}$... la composante de vitesse transversale en azimut,
$v_{qe}$... la composante de vitesse transversale en élévation,
k... le nombre d'onde,
$a_m$... le vecteur avec des entrées correspondant à un nombre de canaux de réception virtuels (combinaison d'un canal d'émission et d'un canal de réception),
$A_c$... la matrice de calibrage,
m... l'indice du temps $t_m$,

$r_m$... le vecteur des distances cible par rapport à tous les canaux de réception au temps $t_m$,

$\omega_d$... la fréquence angulaire de Doppler estimée,

$\overline{r}$... la distance cible moyenne dans l'intervalle de mesure,

TRR... la durée entre les signaux de rampe,

$\Delta\beta_m$... la variation de la position de phase du signal de mesure au temps $t_m$,

$x_m^T$ le vecteur transposé avec le signal de mesure prétraité, sélectionné et ayant subi une transformation de Fourier inverse au temps $t_m$ qui ne contient dans la mesure du possible que la fraction de signal de la réflexion (pic) d'une cible physique pour laquelle la vitesse transversale doit être estimée actuellement.

2. Procédé selon la revendication 1, dans lequel les signaux d'émission modulés de manière identique sont des signaux radar modulés en fréquence en forme de rampe ou des signaux de rampe non linéaires ou des signaux d'impulsion périodiques ou des signaux MROF.

3. Procédé selon la revendication 1 ou 2, dans lequel la composante de vitesse transversale de ladite au moins une cible radar (200) est établie dans la direction d'azimut et/ou d'élévation.

4. Procédé selon l'une quelconque des revendications précédentes, dans lequel une sélection et une reconstruction d'un signal de reflet cible sont effectuées sur un spectre angulaire, les positions de reflet cible étant séparées les unes des autres sur l'angle d'azimut et/ou l'angle d'élévation.

5. Procédé selon l'une quelconque des revendications précédentes, dans lequel pour l'établissement des cibles radar (200), la zone de détection avec les vitesses transversales est sélectionnée de telle sorte que la fonction de qualité est convexe dans la zone de détection et de plus la zone de détection n'est pas complètement balayée.

6. Procédé selon l'une quelconque des revendications précédentes, dans lequel le procédé est exécuté de manière spécifique à une application pour des cibles radar sélectionnées (200).

7. Procédé selon l'une quelconque des revendications précédentes, dans lequel le procédé est utilisé pour un procédé à base de poursuite.

8. Utilisation du procédé selon l'une quelconque des revendications précédentes pour un système qui prévient des chutes d'objets et/ou évite une collision de ce fait et/ou minimise au moins la gravité d'un accident qui en résulte.

9. Dispositif permettant d'établir une composante de vitesse transversale d'au moins une cible radar (200) au moyen d'un dispositif radar (100), présentant :

- un dispositif d'émission (1, 10) doté d'un nombre défini d'éléments d'émission et qui est réalisé pour effectuer une émission périodique de signaux d'émission radar modulés de manière identique dans une zone de détection définie du dispositif radar (100) pendant une durée de mesure définie ($T_{meas}$) ;
- un dispositif de réception (2, 20) doté d'un nombre défini d'éléments de réception et qui est réalisé pour effectuer une réception d'au moins un signal de réception radar réfléchi sur la cible radar (200) ; et
- un dispositif d'évaluation (30) qui est réalisé pour :
- effectuer une conversion analogique/numérique des signaux de réception radar reçus ;
- effectuer une transformation de Fourier bidimensionnelle pour générer un spectre de vitesse/distance des valeurs de mesure numériques pour chaque combinaison d'un élément d'émission et d'un élément de réception ;
- effectuer une détection d'au moins un reflet cible de la cible radar (200) à l'aide de valeurs de crête définies dans un spectre d'amplitude du spectre de vitesse/distance ;
- effectuer un établissement d'une distance de la cible radar (200) au dispositif radar (100) et d'une composante de vitesse radiale par rapport au dispositif radar (100) à partir du spectre de vitesse/distance ;
- effectuer une détermination d'au moins un angle de la cible radar (200) par rapport à l'antenne (10, 20) ;
- sélectionner la cible radar pour laquelle la composante de vitesse transversale doit être établie ; dans lequel
- tous les reflets cibles et toutes les perturbations sont supprimés à l'exception de la cible radar (200) pour laquelle la composante de vitesse transversale doit être estimée ; et dans lequel
- pour le reflet cible ainsi sélectionné de la cible radar (200), une transformation de Fourier inverse est effectuée dans la direction Doppler, le dispositif étant adapté de façon à établir à partir des valeurs de mesure transformées la composante de vitesse transversale de la cible radar (200) selon le procédé selon la revendication 1.

**10.** Utilisation d'un dispositif selon la revendication 10, **caractérisée en ce que** le dispositif est réalisé pour prévenir des chutes d'objets et/ou éviter une collision de ce fait et/ou minimiser au moins la gravité d'un accident qui en résulte.

**11.** Produit de programme informatique comprenant des moyens de code programme pour exécuter le procédé selon l'une quelconque des revendications 1 à 8 lorsqu'il est exécuté sur un dispositif radar (100) et stocké sur un support de données lisible par ordinateur.

100

1

10

200

2

20

τ

30

**Fig. 1**

B

$T_{mod}$

$T_{rr}$

$T_{meas}$

t

**Fig. 2**

Fig. 3

Fig. 4

**Fig. 5**

**Fig. 6**

**Fig. 7**

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012220879 A1
- WO 2015197229 A1

- WO 2015197222 A1

**In der Beschreibung aufgeführte Nicht-Patentliteratur**

- **M. SKOLNIK.** Radar Handbook. 2008
- **STEFFEN LUTZ ; DANIEL ELLENRIEDER ; THOMAS WALTER ; ROBERT WEIGEL.** On fast chirp Modulations and Compressed Sensing for Automotive Radar Applications. *International Radar Symposium,* 2014

- **D. KELLNER et al.** Instantaneous Lateral Velocity Estimation of a Vehicle using Doppler Radar. *16th International Conference on Information Fusion, Istanbul, Turkey,* 2013